# EUROPÄISCHE PATENTSCHRIFT

(11) **EP 2 532 632 B1**
(45) Veröffentlichungstag und Bekanntmachung des Hinweises auf die Patenterteilung: **16.08.2017**
(21) Anmeldenummer: 12168008.6
(22) Anmeldetag: 15.05.2012
(51) Int. Cl.: C04B 24/12, C04B 26/02, C04B 28/06, C04B 40/00, C04B 40/06

(54) **Inhibitorkombination, diese enthaltende Harzmischung und deren Verwendung**
Inhibitor combination, resin mixture containing same and use of same
Combinaison d'inhibiteur, mélange de résine le contenant et leur utilisation

(30) Priorität: 09.06.2011 DE 102011077254
(43) Veröffentlichungstag der Anmeldung: 12.12.2012
(73) Patentinhaber: HILTI Aktiengesellschaft, 9494 Schaan (LI)
(72) Erfinder: Pfeil, Armin, 86916 Kaufering (DE); Brinkhorst, Johannes, 86899 Landsberg (DE); Gigmes, Didier, 13190 Allauch (FR); Valgimigli, Luca, 40127 Bologna (IT); Pratt, Derek, Ottawa, Ontario K1R 5P8 (CA); Bertin, Denis, 13013 Marseille (FR)
(74) Vertreter: Hilti Aktiengesellschaft Corporate Intellectual Property

(56) Entgegenhaltungen:
- EP-A1- 2 327 731
- EP-A2- 1 935 860
- WO-A1-2008/003498
- WO-A2-02/00683
- US-A- 3 548 029

## Beschreibung

Gegenstand der vorliegenden Erfindung ist die Verwendung einer Inhibitorkombination, insbesondere eines 5-Pyrimidinol-Derivates in Kombination mit einem sterisch gehinderten Phenolderivat zur Einstellung der Reaktivität und der Gelzeit von Mörtelmassen auf Kunstharzbasis, insbesondere auf Basis radikalisch polymerisierbarer Verbindungen, eine diese Inhibitorkombination enthaltende Harzmischung sowie ein Zweikomponenten-Mörtelsystem mit einem Reaktionsharzmörtel (A Komponente), der die Harzmischung enthält, und einem Härter (B Komponente), der ein Härtungsmittel für die radikalisch polymerisierbare Verbindung enthält. Außerdem betrifft die vorliegende Erfindung die Verwendung der Harzmischung als organisches Bindemittel zur Verwendung im Baubereich.

Die Verwendung von Harzmischungen auf Basis radikalisch polymerisierbarer Verbindungen ist in den unterschiedlichsten Bereichen, unter anderem im Baubereich, seit langem bekannt. Im Bereich der Befestigungstechnik hat sich die Verwendung von Harzmischungen als organisches Bindemittel für Polymerbeton, durchgesetzt. Es handelt sich dabei insbesondere um deren Verwendung als Reaktionsharzmörtel in Zweikomponentensystemen für Dübelanwendungen, wobei der Reaktionsharzmörtel (A Komponente), die Harzmischung auf Basis radikalisch polymerisierbarer Verbindungen enthält, und der Härter (B Komponente), das Härtungsmittel enthält. Andere, übliche Bestandteile wie anorganische Zuschlagstoffe oder Farbstoffe können in der einen und/oder der anderen Komponente enthalten sein.

Durch Vermischen der beiden Komponenten wird dann durch Radikalbildung die Reaktion in Gang gebracht und das organische Bindemittel zum Duromeren gehärtet.

Harzmischungen, die eine zur Beschleunigung der Polymerisationsreaktion fähige Verbindung, die dazu dient, die Bildung des Radikalstarters zu beschleunigen, enthalten, den sogenannten Beschleuniger, bedürfen des Zusatzes von zur Inhibierung der Polymerisationsreaktion fähige Verbindungen, die dazu dienen, die Polymerisationsreaktion und damit ein unerwünschtes vorzeitiges Polymerisieren der radikalisch polymerisierbaren Verbindung während der Lagerung durch Abfangen gebildeter Radikale zu vermeiden, den Stabilisatoren. Als Stabilisatoren werden üblicherweise unterschiedliche Verbindungen verwendet, welche den radikalisch härtbaren Verbindungen in Mengen von 20 ppm bis 1000 ppm zugesetzt werden. Einige dieser Stabilisatoren lassen sich auch zur Einstellung der Gelzeit verwenden, das heisst zu einer gezielten Verzögerung des Starts der Polymerisation nach dem Vermischen der den Beschleuniger enthaltenden Harzmischung oder diese enthaltenden Reaktionsharzmörtel mit dem Härter. Allerdings müssen hierzu die Mengen der Stabilisatoren, insbesondere wenn Beschleuniger eingesetzt werden, in Abhängigkeit von der angestrebten Gelzeit deutlich auf bis zu 5000 ppm und mehr erhöht werden. In diesem Zusammenhang werden die Verbindungen als Inhibitoren bezeichnet, um sie funktionell von den Stabilisatoren abzugrenzen. Als Inhibitoren dieser Art werden üblicherweise phenolische Verbindungen eingesetzt, wie Hydrochinon, p-Methoxyphenol, 4-*tert*-Butylbrenzcatechin, 2,6-Di-*tert*-butyl-4-methylphenol oder 2,4-Dimethyl-6-*tert*-butylphenol, oder stabile Nitroxylradikale, wie 4-Hydroxy-2,2,6,6-tetramethylpiperidin-1-oxyl (Tempol).

Die phenolischen Verbindungen, vor allem jene, welche sich aufgrund ihrer Reaktivität besonders gut als Inhibitor für die vorzeitige Polymerisation der angesprochenen Reaktionsharze eignen, wie z.B. Hydrochinon, Brenzkatechin, und deren alkylsubstituierten Derivate wie z.B. 4-*tert*-Butylbrenzcatechin, Methylhydrochinon und dergleichen besitzen jedoch den Nachteil, dass sie durch Luftsauerstoff deaktiviert werden, was während der Lagerung eines entsprechend inhibierten Systems zum schleichenden Verlust der inhibierenden Wirkung führt. Diese Deaktivierung verstärkt sich in Gegenwart alkalischer Medien, also beispielsweise alkalisch wirkenden Füllstoffen, wie Zement, was bei Mörtelmassen mit anorganischen Füllstoffen oder bei organisch-anorganischen Hybridmörteln problematisch werden kann. Die Deaktivierung des Inhibitors hat zur Folge, dass die Gelzeit auf unakzeptabel kurze Zeiten absinkt, die Harze bzw. Mörtelmassen somit einen großen Gelzeitdrift während der Lagerung vor dem Gebrauch zeigen.

Zur Verhinderung eines solchen Gelzeitdrifts schlägt die Anmeldung DE 195 31 649 A1 vor, den eigentlich hervorragend geeigneten Stabilisator 4-*tert*-Butylbrenzkatechin durch stabile Nitroxylradikale, wie Piperidinyl-N-oxyl oder Tetrahydropyrrol-N-oxyl zu ersetzen. Diese sind einigermaßen gelzeitstabil. Allerdings hat sich gezeigt, dass diese Inhibitoren zu einer überproportional starken Inhibierung der Polymerisationsreaktion bei tiefen Temperaturen führen und diese Inhibitoren enthaltende Reaktionsharze einer starken Oberflächeninhibierung durch Luftsauerstoff unterliegen, was zu einer ungenügenden Robustheit der Aushärtung führt. Ferner wird vermutet, dass Säurespuren, die zum Beispiel in den Vorstufen der radikalisch härtbaren, ethylenisch ungesättigten Verbindungen, wie polymeres Methylendiphenyldiisocyanat bei Urethan(meth)acrylat-Harzen, enthalten sein können, zur Disproportionierung der Nitroxylradikale und damit zu deren Inaktivierung führen.

Sterisch gehinderte Phenole, wie 2,6-Di-*tert*-butyl-4-methylphenol und 2,4-Dimethyl-6-*tert-*butylphenol verhalten sich zwar deutlich stabiler im Hinblick auf den Gelzeitdrift und führen auch zu einer geeigneten Inhibierung der Polymerisation bei Raumtemperatur. Jedoch ist bei tiefen Temperaturen die Qualität des ausgehärteten Harzes und damit die Auszugsfestigkeit eines mit Hilfe eines solchen inhibierten Reaktionsharzes gesetzten Dübels unbefriedigend. Weiterhin ist festzustellen, dass die Mehrzahl der zur Stabilisierung der Harze eingesetzten Verbindungen sich überhaupt nicht als Mittel zur Einstellung der Gelzeit eignen, also als Inhibitor, da sie in grösseren Mengen, wie sie zur Einstellung der Gelzeit erforderlich sind, als Retarder wirken, d.h. die Polymerisation und somit die mechanischen Endeigenschaften des Polymers empfindlich beeinträchtigen. Sie dienen daher im Wesentlichen zur Stabilisierung des Harzes, d.h. der Lagerstabilität.

Zur Lösung des Problems der mangelhaften Härtungsgeschwindigkeit und Durchhärtung bei tiefen Temperaturen schlägt die Anmeldung EP 1 935 860 A1 vor, den stark aktivierenden *tert*-Butylrest des 4-*tert*-Butylbrenzkatechins durch weniger stark aktivierende Reste zu ersetzen, wodurch eine ausreichende Inhibitorqualität bei signifikant geringerem Gelzeitdrift und ein hohes Leistungsniveau sowie eine hohe Robustheit der Zweikomponenten-Reaktionsharze auch bei tiefen Aushärtetemperaturen erzielt werden kann.

Das Brenzkatechin und dessen Derivate sind zwar sehr effiziente Inhibitoren zur Einstellung der Gelzeit, auch bei tiefen Temperaturen, neigen aber stark zur Autoxidation, was im alkalischen Milieu verstärkt wird, und somit wiederum zum Driften der Gelzeit.

Keiner dieser vorbekannten Lösungsansätze führt demzufolge zu einer befriedigenden Gelzeitstabilität des Reaktionsharzes, vor allem in Gegenwart von Zement oder anderen alkalisch oder sauer reagierenden Substanzen als Füllstoffe oder im Falle erhöhter Restsäurezahlen des Reaktionsharzmörtels, bei gleichzeitiger befriedigender Tieftemperaturhärtung.

Von den Erfindern konnte gezeigt werden, dass die Verwendung von 3-Pyridinol- und 5-Pyrimidinol-Verbindungen als Inhibitoren gegenüber den aus dem Stand der Technik bekannten Inhibitoren gleichendes Inhibierungsverhalten bei vergleichbaren Lastwerten der ausgehärteten Mörtelmasse aufweisen, jedoch nicht deren Nachteile. Allerdings sind diese Verbindung relativ teuer in der Herstellung, so dass deren Einsatz in größeren Mengen, insbesondere als Massenprodukt, nicht sehr wirtschaftlich wäre. Es besteht also zudem Bedarf an Inhibitoren, die vergleichbare Eigenschaften wie die 3-Pyridinol- und 5-Pyrimidinol-Verbindungen haben, aber kostengünstiger in der Herstellung sind.

Die der vorliegenden Erfindung zugrunde liegenden Aufgabe besteht also darin, Inhibitoren für die freie radikalische Polymerisation der eingangs angegebenen Reaktionsharzmörtel auf Basis von Kunstharzen, insbesondere radikalisch härtbarer Verbindungen, die unter anderem mit Zement oder anderen alkalisch oder sauer wirkenden Füllstoffen gefüllt sind und/oder die Verbindungen mit hoher Restsäurezahl enthalten, bereitzustellen, die säurestabil sind, die Stabilität der Gelzeit während der Lagerung sicherstellen und die die Reaktivität, Robustheit und Qualität der Aushärtung einer Mörtelmasse, wie sie beispielsweise mit den aus der DE 195 31 649 A1 und EP 1 935 860 A1 bekannten Inhibitoren erreicht werden kann, auch bei tiefen Temperaturen sicherstellen.

Es hat sich gezeigt, dass beim Austausch der bisher verwendeten Inhibitoren durch in para-Position zur Hydroxylgruppe substituierte Pyrimidinol-Verbindungen eine befriedigende Inhibitorqualität bei signifikant geringerem Gelzeitdrift erreicht werden kann und dass unerwarteterweise auch ein hohes Leistungsniveau und eine hohe Robustheit von entsprechenden Mörtelmassen auch bei tiefen Aushärtetemperaturen erzielt werden kann. Das Leistungsniveau bei tiefen Temperaturen (-5°C) konnte durch die Zugabe an sterisch gehinderten Phenolen nochmals leicht erhöht werden, wobei die Menge an der teueren Pyrimidinol-Verbindungen deutlich reduziert werden konnte, ohne deren positive Eigenschaften einzubüßen.

Gegenstand der Erfindung ist daher die Verwendung einer Inhibitormischung gemäß Anspruch 1. Weitere Gegenstände der Erfindung ist eine die Inhibitormischung enthaltende Harzmischung gemäß Anspruch 7, ein diese enthaltender Reaktionsharzmörtel gemäß Anspruch 14, ein Zweikomponenten-Mörtelsystem gemäß Anspruch 15 sowie dessen Verwendung zur chemischen Befestigung gemäß Anspruch 19. Die entsprechenden Unteransprüche betreffen bevorzugte Ausführungsformen dieser Erfindungsgegenstände.

Ohne sich auf eine bestimmte Theorie festzulegen, wird angenommen, dass die PhenolVerbindung, welche selbst keinen positiven Effekt auf die Gelzeit und das Leistungsniveau (Lastwerte) hat, die Pyrimidinol-Verbindung regeneriert, wodurch die Menge an Pyrimidinol-Verbindung reduziert werden konnte, ohne dass sich die positiven Effekte, wie geringer Gelzeitdrift, hohe Lastwerte und hohe Robustheit des Systems, welche auf die Anwesenheit der Pyrimidinol-Verbindung zurückzuführen sind, verringern. Dabei ist die Pyrimidinol-Verbindung der Hauptinhibitor, der die Reaktivität bestimmt. Die Phenolverbindung bestimmt die Gelzeit und wird als Co-Inhibitor bezeichnet.

Im Sinne der Erfindung bedeuten:
*"Harzmischung,"* eine Mischung aus dem Reaktionsgemisch der Harzherstellung, enthaltend die radikalisch polymerisierbare Verbindung, gegebenenfalls einen Katalysator für die Herstellung der Verbindung und Reaktivverdünner, Beschleunigern sowie Stabilisatoren und ggf. weiteren Reaktivverdünnern; dieser Begriff wird gleichbedeutend mit dem Begriff *"organisches Bindemittel"* verwendet;
*"Reaktionsharzmörtel"* eine Mischung aus Harzmischung und anorganischen Zuschlagstoffen; hierfür wird gleichbedeutend der Begriff "A Komponente" verwendet;
*"Härtungsmittel"* Stoffe, welche die Polymerisation (das Härten) des Grundharzes bewirken;
*"Härter"* eine Mischung aus Härtungsmittel und anorganischen Zuschlagstoffen;
*"Beschleuniger"* eine zur Beschleunigung der Polymerisationsreaktion (Härtung) fähige Verbindung, die dazu dient, die Bildung des Radikalstarters zu beschleunigen;
*"Stabilisator"* eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden; diese Verbindungen werden üblicherweise in so geringen Mengen eingesetzt, dass die Gelzeit nicht beeinflusst wird;
*"Inhibitor"* ebenfalls eine zur Inhibierung der Polymerisationsreaktion (Härtung) fähige Verbindung, die dazu dient, die Polymerisationsreaktion unmittelbar nach der Zugabe des Härtungsmittels zu verzögern; diese Verbindungen werden üblicherweise in solchen Mengen eingesetzt, dass die Gelzeit beeinflusst wird;
*"Reaktivverdünner"* flüssige oder niedrigviskose radikalisch polymerisierbare Verbindungen, welche die Harzmischung verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden;
*"Mörtelmasse"* bezeichnet die Formulierung, die durch Mischen des Reaktionsharzmörtels mit dem Härter, der das Härtungsmittel enthält, erhalten wird, und als solches direkt zur chemischen Befestigung verwendet werden kann;
*"Zweikomponenten-Mörtelsystem"* wird ein System bezeichnet, dass eine A-Komponente, den Reaktionsharzmörtel, und eine B-Komponente, den Härter, umfasst, wobei die beiden Komponenten reaktionsinhibierend getrennt gelagert sind, so dass eine Härtung des Reaktionsharzmörtels erst nach deren Mischen erfolgt.

Gegenstand der Erfindung ist somit die Verwendung einer Kombination aus einer Verbindung der allgemeinen Formel (I): 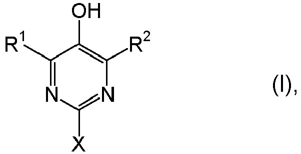 in der R¹ und R² jeweils unabhängig voneinander Wasserstoff, eine verzweigte oder unverzweigte C₁-C₂₀-Alkylgruppe ist und X OR³ oder NR³₂ ist, wobei R³ eine verzweigte oder unverzweigte C₁-C₂₀-Alkylgruppe oder eine C₂-C₄-Polyalkylenoxid-Gruppe ist, mit einer Verbindung der allgemeinen Formel (II): 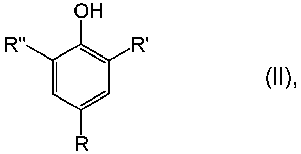 in der R Wasserstoff, eine unverzweigte oder verzweigte C₁-C₁₈-Alkylgruppe oder -OR³ oder -NR³₂ ist, wobei R³ eine verzweigte oder unverzweigte C₁-C₂₀-Alkylgruppe ist, R' Wasserstoff, eine unverzweigte oder verzweigte C₁-C₁₈-Alkylgruppe ist und R" eine unverzweigte oder verzweigte C₁-C₁₈-Alkylgruppe ist, zur Einstellung der Reaktivität und der Gelzeit von Zweikomponenten-Reaktivharzmassen auf Basis von radikalisch härtbaren Reaktionsharzen.

Die Gruppe X in Formel (I) ist eine elektronenschiebende Gruppe, die entweder direkt oder über Konjugation oder Hyperkonjugation Elektronendichte in den aromatischen Ring schieben und damit die OH-Gruppe für den Wasserstofftransfer auf freie Radikale, bevorzugt auf Alkylradikale, wie sie bei der radikalischen Polymerisation auftreten, aktivieren kann und gleichzeitig zur Löslichkeit der 5-Pyrimidinol-Verbindungen beiträgt, da sich diese aufgrund ihrer hohen Polarität unter Umständen nicht ausreichend in Methacrylatharzen, welche eine mittlere bis geringe Polarität aufweisen, lösen. Erfindungsgemäß stellt X -OR³ oder -NR³₂ dar, wobei R³ eine unverzweigte oder verzweigte C₁-C₂₀-Alkylgruppe ist, bevorzugt eine unverzweigte oder verzweigte C₁-C₈-Alkylgruppe, besonders bevorzugt Methyl oder n-Octyl.

Die Reste R¹ und R² in Formel (I) sind bevorzugt unabhängig voneinander Wasserstoff, eine verzweigte oder unverzweigte C₁-C₈-Alkylgruppe, besonders bevorzugt Wasserstoff oder Methyl.

Ganz besonders bevorzugt ist die Verbindung der Formel (I) eine Verbindung der Formeln I-1 (2-(Dimethylamino)pyrimidin-5-ol), I-2 (2-(Dimethylamino)-4,6-dimethylpyrimidin-5-ol; Me2N-PymOH) oder I-3 (4,6-Dimethyl-2-(octyloxy)pyrimidin-5-ol; C8O-PymOH):

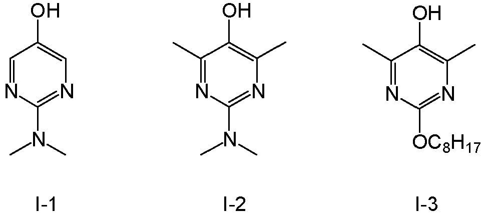

Der Rest R in Formel (II) ist Wasserstoff, eine unverzweigte oder verzweigte C₁-C₁₈-Alkylgruppe oder -OR³ oder -NR³₂, wobei R³ eine verzweigte oder unverzweigte C₁-C₂₀-Alkylgruppe ist, R' ist Wasserstoff, eine unverzweigte oder verzweigte C₁-C₁₈-Alkylgruppe ist und R" ist eine unverzweigte oder verzweigte C₁-C₁₈-Alkylgruppe ist. Bevorzugt ist R eine Methyl- oder Methoxygruppe und R' und R" eine Methyl-, iso-Propyl- oder *tert*-Butylgruppe.

Besonders bevorzugt ist die Verbindung der Formel (II) eine Verbindung der Formeln II-1 (2,6-Di-*tert*-butyl-4-methylphenol; BHT) oder II-2 (2,6-Di-*tert*-butyl-4-hydroxyanisol; TBA):

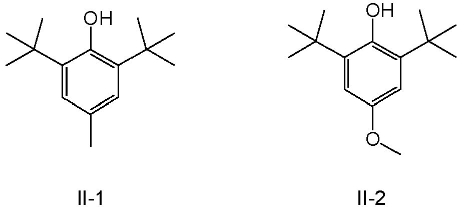

Ganz besonders bevorzugt sind folgende drei Kombinationen (III-1), (III-2) und (III-3) aus Verbindung (I-1) mit Verbindung (II-1), Verbindung (I-2) mit (II-2) und Verbindung (I-3) mit Verbindung (II-1), namentlich eine Kombination (III-1) aus 2-(Dimethylamino)pyrimidin-5-ol mit 2,6-Di-*tert*-butyl-4-methylphenol, eine Kombination (III-2) aus 2-(Dimethylamino)-4,6-dimethylpyrimidin-5-ol mit 2,6-Di-*tert*-butyl-4-hydroxyanisol oder eine Kombination (III-3) aus 4,6-Dimethyl-2-(octyloxy)pyrimidin-5-ol mit 2,6-Di-*tert*-butyl-4-methylphenol, wobei die Kombination (III-3) bevorzugt ist:

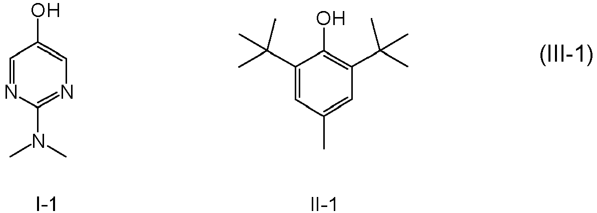

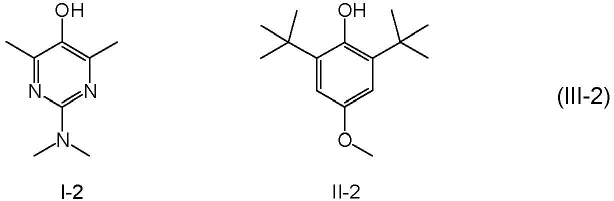

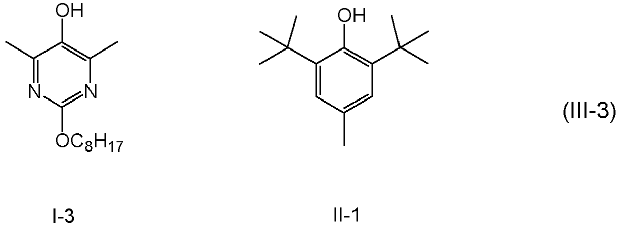

Das molare Verhältnis der Inhibitoren I : II beträgt erfindungsgemäß zwischen 1:1 und 1:10. In manchen Fällen kann das Verhältnis sogar bis 1:50 reichen. Der Fachmann kann auf einfache Weise und ohne Aufwand herausfinden, wieweit der Hauptinhibitor I durch den Co-Inhibitor II "verdünnt", d.h. ersetzt, werden kann.

Mit diesen Kombinationen können die Gelzeit verlängert und gleichzeitig die Lastwerte bei tiefen Temperaturen (-5°C) gesteigert werden. Ein positiver Nebeneffekt ist, dass die Menge an teuren Pyrimidinolen deutlich reduziert werden kann.

Ein weiterer Gegenstand der Erfindung ist eine Harzmischung umfassend mindestens eine radikalisch polymerisierbare Verbindung, gegebenenfalls mindestens einen Reaktivverdünner und ein Mittel zur Einstellung der Reaktivität und der Gelzeit, wobei das Mittel zur Einstellung der Reaktivität und der Gelzeit eine Kombination aus einer Verbindung der allgemeinen Formel (I): 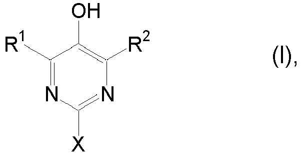 mit einer Verbindung der allgemeinen Formel (II): 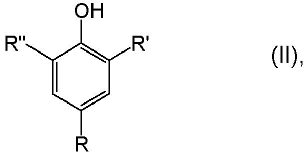 wie sie oben beschrieben sind, ist. Bezüglich der Verbindungen der Formeln (I) und (II) wird auf die obigen Ausführungen verwiesen.

Das Mittel zur Einstellung der Reaktivität und der Gelzeit wird vorzugsweise in einer Menge von 100 ppm bis 2,0 Gew.-%, bevorzugt von 500 ppm bis 1,5 Gew.-% und weiter bevorzugt von 1000 ppm bis 1 Gew.- %, bezogen auf die radikalisch polymerisierbare Verbindung, eingesetzt.

Als radikalisch polymerisierbare Verbindungen sind erfindungsgemäß ethylenisch ungesättigte Verbindungen, cyclische Monomere, Verbindungen mit Kohlenstoff-Kohlenstoff-Dreifachbindungen und Thiol-Yne/Ene-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharze hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

In diesem Zusammenhang wird auf die Anmeldung US 2011071234 verwiesen, deren Inhalt hiermit in diese Anmeldung aufgenommen wird.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Die Harzmischung enthält 10 bis 90 Gew.-%, vorzugsweise 30 bis 70 Gew.-%, bezogen auf die Harzmischung, mindestens einer radikalisch polymerisierbaren Verbindung.

Die Harzmischung kann sofern erforderlich Lösungsmittel enthalten. Die Lösungsmittel können dem Reaktionssystem gegenüber inert sein oder während der Härtung an der Polymerisation teilnehmen, sogenannte Reaktivverdünner.

In einer bevorzugten Ausführungsform der Erfindung enthält die Harzmischung weitere niederviskose, radikalisch polymerisierbare Verbindungen als Reaktivverdünner, um die Viskosität der als Harz fungierenden radikalisch polymerisierbaren Verbindung anzupassen, falls erforderlich. Die Reaktivverdünner können in einer Menge von 90 bis 10 Gew.-%, vorzugsweise 70 bis 30 Gew.-%, bezogen auf die Harzmischung, zugegeben werden.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.².⁶-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert.-Butylstyrol, Divinylbenzol und Allylverbindungen.

Die zur Bezeichnung der radikalisch polymerisierbaren Verbindungen verwendete Nomenklatur "(Meth)acryl.../...(methy)acryl..." bedeutet, dass mit der dieser Bezeichnung sowohl die "Methacryl... /... methacryl..."- als auch die "Acryl.../...acryl... "-Verbindungen umfasst sein sollen.

Gemäß einer bevorzugten Ausführungsform der Erfindung liegt die Harzmischung in vorbeschleunigter Form vor, das heisst sie enthält einen Beschleuniger für das Härtungsmittel. Bevorzugte Beschleuniger für das Härtungsmittel sind aromatische Amine und/oder Salze von Kupfer, Kobalt, Mangan, Zinn, Vanadium oder Cer. Besonderes vorteilhaft haben sich als Beschleuniger N,N-Dimethylanilin, N,N-Diethylanilin, N,N-Di-isopropanol-p-toluidin, N,N-Diisopropyliden-p-toluidin, N,N-Dimethyl-p-toluidin, N,N-Diethylol-p-toluidin, N,N-Diisopropylol-m-toluidin, N,N-Bis(2-hydroxyethyl)-toluidin, N,N-Bis(2-hydroxyethyl)-xylidin, N-Methyl-N-hydroxyethyl-p-toluidin, Cobaltoctoat, Cobaltnaphthenat, Vanadium(IV)-acetylacetonat und Vanadium(V)-acetylacetonat erwiesen.

Der Beschleuniger ist erfindungsgemäß in einer Menge von 100 ppm bis 5 Gew.-%, vorzugsweise 1000 ppm bis 2,5 Gew.- %, bezogen auf die Harzmischung, enthalten.

Ein weiterer Gegenstand der Erfindung ist ein Reaktionsharzmörtel, der neben der eben beschriebenen Harzmischung, dem organischen Bindemittel, anorganische Zuschlagstoffe enthält, wie Füllstoffe und/oder weitere übliche Zusätze.

Der Anteil der Harzmischung in dem Reaktionsharzmörtel beträgt bevorzugt 10 bis 60 Gew.-%, stärker bevorzugt 20 bis 30 Gew.-%, bezogen auf den Reaktionsharzmörtel.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Russ, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden. Bevorzugt und deutlicher verstärkend wirken sich jedoch die globulären, inerten Stoffe (Kugelform) aus.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Ein weiterer Gegenstand der Erfindung ist ein Zweikomponenten-Mörtelsystem umfassend als A Komponente den eben beschriebenen Reaktionsharzmörtel und als B Komponente einen Härter, der insbesondere räumlich und damit reaktionsinhibierend getrennt vom Reaktionsharzmörtel gelagert ist. Bevorzugt enthält der Härter als Härtungsmittel ein Peroxid. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate der Formel -OC(O)O-, Peroxyester der Formel -C(O)OO-, Diacylperoxide der Formel -C(O)OOC(O)-, Dialkylperoxide der Formel -OO- und dergleichen. Diese können als Oligomer oder Polymer vorliegen. Eine umfassende Reihe an Beispielen für geeignete Peroxide ist zum Beispiel in den Anmeldungen US 2002/0091214-A1, Absatz [0018], WO 02051879 A1 und EP 1 221 449 A1 beschrieben.

Bevorzugt sind die Peroxide aus der Gruppe der organischen Peroxide ausgewählt. Geeignete organische Peroxide sind: tertiäre Alkylhydroperoxide, wie *tert*-Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxidverbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Die Härtungsmittel werden zweckmässigerweise durch Wasser, verflüssigend wirkende, nichtreaktive Verdünnungsmittel, wie beispielsweise Phthalate (WO 0205187 A1), oder auch inerte Füllstoffe phlegmatisiert, wobei Quarzsande und Tonerden bevorzugt sind.

Die Peroxide werden erfindungsgemäß in Mengen von 0,1 bis 10 Gew.-%, vorzugsweise von 1 bis 6 Gew.- %, bezogen auf die Harzmischung, eingesetzt.

Bevorzugt enthält die B-Komponente des Zweikomponenten-Mörtelsystems ferner anorganische Zuschlagstoffe, wobei die Zuschlagstoffe dieselben sind, wie sie der A-Komponente zugegeben werden können.

Bei einer besonders bevorzugten Ausführungsform des Zweikomponenten-Mörtelsystems enthält die A Komponente neben dem Reaktionsharzmörtel zusätzlich noch eine hydraulisch abbindende oder polykondensierbare anorganische Verbindung und die B Komponente neben dem Härtungsmittel noch Wasser. Derartige Mörtelmassen sind ausführlich in DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

Das Zweikomponenten-Mörtelsystem umfasst bevorzugt die A Komponente und die B Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Mörtelsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Die erfindungsgemäße Harzmischung, der Reaktionsharzmörtel sowie das Zweikomponenten-Mörtelsystem finden vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und der gleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Im Gegensatz zu Harzmischungen und Reaktionsharzmörteln, die mit phenolischen Inhibitoren inhibiert werden, weisen die erfindungsgemäßen Systeme auch nach längerer Lagerung eine stabile Gelzeit auf, d.h. dass die Gelzeit auch bei späterem Gebrauch nicht auf unakzeptabel kurze Werte driftet. Im Vergleich zu Herzmischungen und Reaktionsharzmörteln, welche mit stabilen Nitroxylradikalen inhibiert werden, weisen die erfindungsgemäßen Systeme auch bei tiefen Temperaturen eine gute Durchhärtung auf.

Die folgenden Beispiele dienen der weiteren Erläuterung der Erfindung.

### AUSFÜHRUNGSBEISPIELE

Die Gelzeiten und die Lastwerte der gemäß den Beispielen und Vergleichsbeispielen hergestellten Mörtelmassen werden im Folgenden verglichen:

### a) Bestimmung der Gelzeit

### Beispiel 1

### A Komponente

Zur Herstellung des Reaktionsharzmörtels werden zu 976,1 g Methacrylatharz 4,06 g 2,6-Di-*tert*-butyl-4-hydroxyanisol (TBA) und 2,89 g 2-(Dimethylamino)-4,6-dimethylpyrimidin-5-ol (Me2N-PymOH) gegeben und gerührt, bis eine homogene Lösung erhalten wird. Dies entspricht einem Inhibitorverhältnis von etwa 1:1. Anschließend werden unter Vakuum 72,4 g pyrogene Kieselsäure (Aerosil® R202; Evonik Degussa GmbH), 482,68 g Aluminatzement und 868,82 g Quarzsand F32 mit einem Dissolver in der Harzlösung dispergiert, bis eine homogene Paste vorliegt.

### B Komponente

Als Härter für das Methacrylatharz werden 10 Gew.-% einer 40%-igen Dispersion von Benzoylperoxid in Wasser und 14 Gew.-% entmineralisiertes Wasser vorgelegt und darin 53 Gew.-% eines Quarzsandes mit einer durchschnittlichen Teilchengröße von 40 µm und 22 Gew.-% einer Tonerde mit einer durchschnittlichen Teilchengröße von 0,8 µm dispergiert und mit 1 Gew.-% pyrogener Kieselsäure verdickt.

### Vergleichsbeispiel 1

Als Vergleich werden ein Reaktionsharzmörtel und ein Härter gemäß dem obigen Beispiel hergestellt, mit dem Unterschied, dass im Reaktionsharzmörtel als Inhibitor 4,06 g 2,6-Di-*tert*-butyl-4-hydroxyanisol (TBA) verwendet werden.

### Vergleichsbeispiel 2

Als Vergleich werden ferner ein Reaktionsharzmörtel und ein Härter gemäß dem obigen Beispiel hergestellt, mit dem Unterschied, dass im Reaktionsharzmörtel als Inhibitor 0,33 g 2-(Dimethylamino)-4,6-dimethylpyrimidin-5-ol (Me2N-PymOH) verwendet werden.

Die Gelzeit wurde für die Zusammensetzungen aus Beispiel 1 und den Vergleichsbeispielen 1 und 2 bestimmt, wobei die Mengen so eingestellt wurden, dass die in der Tabelle 1 erhaltenen Mengen an Inhibitoren erhalten wurden. Die Ergebnisse zusammen mit den eingesetzten Inhibitormengen sind in Tabelle 1 dargestellt.

Die Bestimmung der Gelzeit einer Mischung aus den A- und B-Komponenten der Zweikomponenten-Harzzusammensetzung erfolgt mit einer handelsüblichen Vorrichtung (GELNORM®-Gel Timer) bei einer Temperatur von 25°C. Hierzu werden die A- und die B-Komponente im Volumenverhältnis 3:1 gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945, Blatt 1 und DIN 16916. Die Gelzeit ist die Zeit, bei der ein Temperaturanstieg um 10K erreicht wird, hiervon 25°C nach 35°C.

**Tabelle 1: Bestimmung der Gelzeit von Zweikomponenten-Harzzusammensetzungen**

| **Inhibitor** | **Gelzeit gefüllt (25°C → 35°C) [min]** | **Menge [mol/g]^{a}** |
|---|---|---|
| Me2N-PymOH * | 4,6 ± 0,4 | 1,32*10⁻⁴ |
| TBA ** | 4,8 ± 0,3 | 1,32*10⁻⁴ |
| Me2N-PymOH+TBA (1:1) | 4,2 ± 0,4 | 1,32*10⁻⁴ |
| Me2N-PymOH | 9,7 ± 0,5 | 2,64*10⁻⁴ |
| TBA | 8,9 ± 0,4 | 2,64*10⁻⁴ |
| Me2N-PymOH+TBA (1:1) | 15,7 ± 1,9 | 2,64*10⁻⁴ |

| | | |
|---|---|---|
| ^{a}: bezogen auf die Komponente (A) ^{*}: 2-(Dimethylamino)-4,6-dimethylpyrimidin-5-ol ^{**}: 2,6-Di-*tert*-butyl-4-hydroxyanisol | | |

Hieraus wird deutlich, dass die Gelzeit der mit der Inhibitorkombination eingestellten erfindungsgemäßen Harzzusammensetzungen bei Raumtemperatur im Bereich der mit den einzelnen Inhibitoren eingestellten Harzzusammensetzungen liegt. Bei Verdoppelung der Menge der 1:1 Inhibitorkombination erhöhte sich die Gelzeit um das vierfache, wohin gegen die Gelzeit bei Verdoppelung der Menge an den einzelnen Inhibitoren lediglich um das doppelte verzögert wird. Dies zeigt deutlich, dass für die Einstellung der Gelzeit ein synergistischer Effekt zwischen den beiden Inhibitoren gegeben ist.

### b) Bestimmung der Lastwerte

### Beispiel 2

Analog Beispiel 1 werden ein Reaktionsharzmörtel und ein Härter hergestellt, mit dem Unterschied, dass dem Reaktionsharzmörtel als Inhibitor 2,1 g 2,6-Di-*tert*-butyl-4-methylphenol (BHT) (9,76 mol/g) und 2,41 g 4,6-Dimethyl-2-(octyloxy)pyrimidin-5-ol (C8O-PymOH) (9,74 mol/g) zugegeben werden. Dies entspricht einem Molverhältnis der Inhibitorkombination BHT : C8O-PymOH von etwa 1:1.

### Beispiel 3

Analog Beispiel 1 werden ein Reaktionsharzmörtel und ein Härter hergestellt mit dem Unterschied, dass dem Reaktionsharzmörtel als Inhibitor 2,38 g 2,6-Di-*tert*-butyl-4-methylphenol (BHT) und 0,27 g 4,6-Dimethyl-2-(octyloxy)pyrimidin-5-ol (C8O-PymOH) zugegeben werden. Dies entspricht einem Molverhältnis der Inhibitorkombination BHT : C8O-PymOH von etwa 10:1.

### Vergleichsbeispiel 3

Als Vergleich werden ein Reaktionsharzmörtel und ein Härter gemäß den obigen Beispielen hergestellt, mit dem Unterschied, dass in dem Reaktionsharzmörtel als Inhibitor 3,07 g 2,6-Di-*tert*-butyl-4-methylphenol (BHT) verwendet werden.

### Vergleichsbeispiel 4

Als Vergleich werden ein Reaktionsharzmörtel und ein Härter gemäß den obigen Beispielen hergestellt, mit dem Unterschied, dass im Reaktionsharzmörtel als Inhibitor 9,84 g 4,6-Dimethyl-2-(octyloxy)pyrimidin-5-ol (C8O-PymOH) verwendet werden.

Zur Bestimmung der Lastwerte der ausgehärteten Masse verwendet man eine Ankergewindestange M12, die in ein Bohrloch in Beton mit einem Durchmesser von 14 mm und einer Bohrlochtiefe von 72 mm mit dem erfindungsgemässen Zweikomponenten-Reaktionsharz eingedübelt wird. Man ermittelt die mittlere Versagenslast durch zentrisches Ausziehen der Ankergewindestange mit enger Abstützung unter Verwendung hochfester Ankergewindestangen. Es werden jeweils 3 Ankergewindestangen eingedübelt und nach 24 Stunden Aushärtung ihre Lastwerte bestimmt. Die hierbei ermittelten Lastwerte sind als Mittelwert in der nachfolgenden Tabelle 1 ebenfalls aufgeführt.

**Tabelle 2: Ergebnisse der Bestimmung der Lastwerte**

| **Inhibitor** | **Referenz ¹ [N/mm²]** | **-5°C ² [N/mm²]** | **+40°C ³ [N/mm²]** | **in service +80°C ⁴ [N/mm²]** |
|---|---|---|---|---|
| BHT * | 60,9 | 48,2 | 55,7 | 54,2 |
| C8O ** | 53,3 | 42,8 | 49,7 | 39,1 |
| BHT+C8O (1:1) | 54,9 | 56,5 | 54,9 | 52,2 |
| BHT+C8O (10:1) | 62,1 | 53,0 | 55,1 | 47,3 |

| | | | | |
|---|---|---|---|---|
| ¹: trockenes gereinigtes Bohrloch, Setzen und Aushärten bei Raumtemperatur ²: wie 1, aber Setzen und Aushärten bei -50°C ³: wie 1, aber Setzen und Aushärten bei +40°C ⁴: wie 1 aber Setzen und Aushärten über 24h bei Raumtemperatur, dann innerhalb 24 h auf +80°C erwärmen und bei +80°C den Auszugstest durchführen ^{*}: 2,6-Di-*tert*-butyl-4-methylphenol ^{**}: 4,6-Dimethyl-2-(octyloxy)pyrimidin-5-ol | | | | |

Wie aus obiger Tabelle 2 ersichtlich ist, zeigen die erfindungsgemäß mit den Inhibitorkombinationen 1:1 und 10:1 eingestellten Zweikomponenten-Harzzusammensetzungen bei +40°C und +80°C Lastwerte, die im Bereich der mit den einzelnen Inhibitoren eingestellten Harzzusammensetzungen erhalten werden. Bei Temperaturen von -5°C liegen die Lastwerte der mit den Inhibitorkombinationen eingestellten Zweikomponenten-Harzzusammensetzungen über den Werten, die mit den einzelnen Inhibitoren erreicht werden. Deutlich wird auch, dass eine Reduktion der Konzentration an C8O-PymOH bei gleichzeitiger Erhöhung der Konzentration an BHT (Molverhältnis 1:10) einen Lastwert liefert, der nur geringfügig größer ist als bei dem Molverhältnis von 1:1.

Diese Beispiele belegen die überraschende Tatsache, dass je nach erwünschtem Effekt durch entsprechende Auswahl der Inhibitorkombination eine Verlängerung der Gelzeit oder eine Steigerung der Lastwerte erreicht werden konnte. Zudem konnte aufgezeigt werden, dass die Menge an den teuren Inhibitoren zugunsten des billigeren Co-Inhibitors deutlich reduziert werden konnte, ohne auf die positiven Effekte der Inhibitorkombination verzichten zu müssen.

## Patentansprüche

1. Verwendung einer Inhibitorkombination aus einer Verbindung der allgemeinen Formel (I): 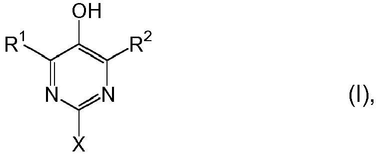 in der R¹ und R² jeweils unabhängig voneinander Wasserstoff oder eine unverzweigte oder verzweigte C₁-C₂₀-Alkylgruppe ist, X -OR³ oder -NR³₂ ist, wobei R³ eine unverzweigte oder verzweigte C₁-C₂₀-Alkylgruppe oder eine C₂-C₄-Polyalkylenoxid-Gruppe ist, und einer Verbindung der allgemeinen Formel (II): 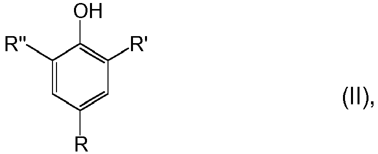 in der R Wasserstoff, eine unverzweigte oder verzweigte C₁-C₁₈-Alkylgruppe oder -OR³ oder -NR³₂ ist, wobei R³ eine verzweigte oder unverzweigte C₁-C₂₀-Alkylgruppe ist, R' Wasserstoff, eine unverzweigte oder verzweigte C₁-C₁₈-Alkylgruppe ist und R" eine unverzweigte oder verzweigte C₁-C₁₈-Alkylgruppe ist, zur Einstellung der Reaktivität und der Gelzeit von Harzmischungen auf Basis von radikalisch polymerisierbaren Verbindungen.

2. Verwendung nach Anspruch 1, wobei in Formel (I) R¹ und R² unabhängig voneinander Wasserstoff oder eine unverzweigte oder verzweigte C₁-C₈-Alkylgruppe sind.

3. Verwendung nach Anspruch 2, wobei in Formel (I) R¹ und R² unabhängig voneinander Wasserstoff oder Methyl sind.

4. Verwendung nach Anspruch 3, wobei die Verbindung der Formel (I) 2-(Dimethylamino)pyrimidin-5-ol, 2-(Dimethylamino)-4,6-dimethylpyrimidin-5-ol oder 4,6-Dimethyl-2-(octyloxy)pyrimidin-5-ol ist.

5. Verwendung nach einem der Ansprüche 1 bis 4, wobei die Verbindung der Formel (II) 2,6-Di-*tert*-butyl-4-methylphenol oder 2,6-Di-*tert*-butyl-4-hydroxyanisol ist.

6. Verwendung nach Anspruch 5, wobei die Kombination eine Kombination (III-1) aus 2-(Dimethylamino)pyrimidin-5-ol mit 2,6-Di-*tert*-butyl-4-methylphenol, eine Kombination (III-2) aus 2-(Dimethylamino)-4,6-dimethylpyrimidin-5-ol mit 2,6-Di-*tert*-butyl-4-hydroxyanisol oder eine Kombination (III-3) aus 4,6-Dimethyl-2-(octyloxy)pyrimidin-5-ol mit 2,6-Di-*tert*-butyl-4-methylphenol ist.

7. Verwendung nach einem der vorhergehenden Ansprüche, wobei das molare Verhältnis der Verbindung der Formel (I) zu der Verbindung der Formel (II) 1:1 bis 1:10 beträgt.

8. Harzmischung umfassend mindestens eine radikalisch polymerisierbare Verbindung, gegebenenfalls einen Reaktivverdünner und ein Mittel zur Einstellung der Reaktivität und der Gelzeit enthält, wobei das Mittel zur Einstellung der Reaktivität und der Gelzeit eine Inhibitorkombination aus einer Verbindung der allgemeinen Formel (I): 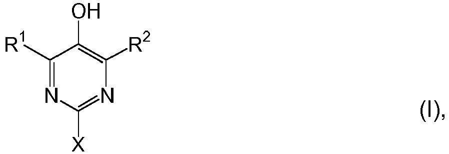 in der R¹ und R² jeweils unabhängig voneinander Wasserstoff, eine verzweigte oder unverzweigte C₁-C₂₀-Alkylgruppe ist und X -OR³ oder -NR³₂ ist, wobei R³ eine unverzweigte oder verzweigte C₁-C₂₀-Alkylgruppe oder eine C₂-C₄-Polyalkylenoxid-Gruppe ist, mit einer Verbindung der allgemeinen Formel (II): 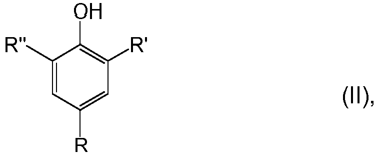 in der R Wasserstoff, eine unverzweigte oder verzweigte C₁-C₁₈-Alkylgruppe oder -OR³ oder -NR³₂ ist, wobei R³ eine verzweigte oder unverzweigte C₁-C₂₀-Alkylgruppe ist, R' Wasserstoff, eine unverzweigte oder verzweigte C₁-C₁₈-Alkylgruppe ist und R" eine unverzweigte oder verzweigte C₁-C₁₈-Alkylgruppe ist.

9. Harzmischung nach Anspruch 8, wobei in Formel (I) R¹ und R² unabhängig voneinander Wasserstoff, eine verzweigte oder unverzweigte C₁-C₈-Alkylgruppe sind.

10. Harzmischung nach Anspruch 9, wobei in Formel (I) R¹ und R² unabhängig voneinander Wasserstoff oder Methyl sind.

11. Harzmischung nach Anspruch 10, wobei das Mittel (c) für die Einstellung der Reaktivität und der Gelzeit 2-(Dimethylamino)pyrimidin-5-ol, 2-(Dimethylamino)-4,6-dimethylpyrimidin-5-ol oder 4,6-Dimethyl-2-(octyloxy)pyrimidin-5-ol ist.

12. Harzmischung nach einem der Ansprüche 8 bis 11, wobei die Verbindung der Formel (II) 2,6-Di-*tert*-butyl-4-methylphenol oder 2,6-Di-*tert*-butyl-4-hydroxyanisol ist.

13. Harzmischung nach Anspruch 12, wobei das Mittel zur Einstellung der Gelzeit und der Reaktivität eine Kombination (III-1) aus 2-(Dimethylamino)pyrimidin-5-ol mit 2,6-Di-*tert-*butyl-4-methylphenol, eine Kombination (III-2) aus 2-(Dimethylamino)-4,6-dimethylpyrimidin-5-ol mit 2,6-Di-*tert*-butyl-4-hydroxyanisol oder eine Kombination (III-3) aus 4,6-Dimethyl-2-(octyloxy)pyrimidin-5-ol mit 2,6-Di-*tert*-butyl-4-methylphenol ist.

14. Harzmischung nach einem der Ansprüche 8 bis 13, wobei das molare Verhältnis der Verbindung der Formel (I) zu der Verbindung der Formel (II) 1:1 bis 1:10 beträgt.

15. Reaktionsharzmörtel, umfassend die Harzmischung nach einem der Ansprüche 8 bis 14 und anorganische Zuschlagstoffe.

16. Zweikomponenten-Mörtelsystem umfassend als A Komponente den Reaktionsharzmörtel nach Anspruch 15 und reaktionsinhibierend getrennt angeordnet als B Komponente einen Härter.

17. Zweikomponenten-Mörtelsystem nach Anspruch 16, wobei der Härter ein anorganisches oder organisches Peroxid als Härtungsmittel enthält.

18. Zweikomponenten-Mörtelsystem nach Anspruch 16 oder 17, wobei der Härter ferner anorganische Zuschlagstoffe enthält.

19. Zweikomponenten-Mörtelsystem nach einem der Ansprüche 16 bis 18, wobei die A Komponente neben dem Reaktionsharzmörtel zusätzlich noch eine hydraulisch abbindende oder polykondensierbare anorganische Verbindung und die B Komponente neben dem Härtungsmittel zusätzlich noch Wasser enthält.

20. Verwendung der Zweikomponenten-Mörtelsystems nach einem der Ansprüche 16 bis 19 zur chemischen Befestigung.

21. Patrone, Kartusche oder Folienbeutel, enthaltend ein Zweikomponenten-Mörtelsystem nach einem der Ansprüche 16 bis 19 die zwei oder mehrere voneinander getrennte Kammern umfassen, in welchen der Reaktionsharzmörtel bzw. der Härter angeordnet sind.

## Claims

1. Use of an inhibitor combination of a compound of general formula (I): 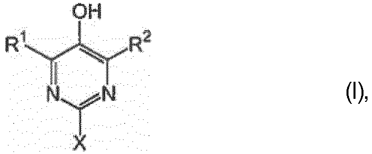 in which R¹ and R² each independently of each other are hydrogen or an unbranched or branched C₁-C₂₀ alkyl group and X is -OR³ or -NR³₂, in which R³ is an unbranched or branched C₁-C₂₀ alkyl group or a C₂-C₄ polyalkylene oxide group, and a compound of general formula (II): 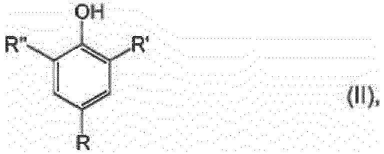 in which R is hydrogen, an unbranched or branched C₁-C₁₈ alkyl group or -OR³ or - NR³₂, in which R³ is a branched or unbranched C₁-C₂₀ alkyl group, R' is hydrogen, an unbranched or branched C₁-C₁₈ alkyl group and R" is an unbranched or branched C₁-C₁₈ alkyl group, for adjusting the reactivity and gel time of resin mixtures based on radically polymerisable compounds.

2. Use according to claim 1, in which in formula (I) R¹ and R² independently of each other are hydrogen or an unbranched or branched C₁-C₈ alkyl group.

3. Use according to claim 2, in which in formula (I) R¹ and R² independently of each other are hydrogen or methyl.

4. Use according to claim 3, in which the compound of formula (I) is 2-(dimethylamino)pyrimidine-5-ol, 2-(dimethylamino)-4,6-dimethylpyrimidine-5-ol or 4,6-dimethyl-2-(octyloxy)pyrimidine-5-ol.

5. Use according to one of claims 1 to 4, in which the compound of formula (II) is 2,6-di-*tert*-butyl-4-methylphenol or 2,6-di-*tert*-butyl-4-hydroxyanisole.

6. Use according to claim 5, in which the combination is a combination (III-1) of 2-(dimethylamino)pyrimidine-5-ol with 2,6-di-*tert*-butyl-4-methylphenol, a combination (III-2) of 2-(dimethylamino)-4,6-dimethylpyrimidine-5-ol with 2,6-di-*tert*-butyl-4-hydroxyanisole or a combination (III-3) of 4,6-dimethyl-2-(octyloxy)pyrimidine-5-ol with 2,6-di-*tert*-butyl-4-methylphenol.

7. Use according to one of the previous claims, in which the molar ratio of the compound of formula (I) to the compound of formula (II) is 1:1 to 1:10.

8. Resin mixture comprising at least one radically polymerisable compound, optionally containing a reactive thinner and an agent for adjusting reactivity and gel time, in which the agent for adjusting reactivity and gel time is an inhibitor combination of a compound of general formula (I): 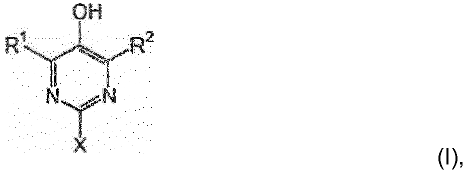 in which R¹ and R² each independently of each other are hydrogen, a branched or unbranched C₁-C₂₀ alkyl group and X is -OR³ or -NR³₂, in which R³ is an unbranched or branched C₁-C₂₀ alkyl group or a C₂-C₄ polyalkylene oxide group, with a compound of general formula (II): 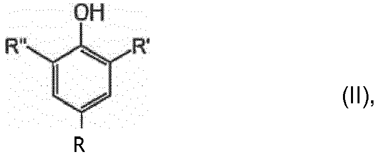 in which R is hydrogen, an unbranched or branched C₁-C₁₈ alkyl group or -OR³ or - NR³₂, in which R³ is a branched or unbranched C₁-C₂₀ alkyl group, R' is hydrogen, an unbranched or branched C₁-C₁₈ alkyl group and R" is an unbranched or branched C₁-C₁₈ alkyl group.

9. Resin mixture according to claim 8, in which in formula (I) R¹ and R² independently of each other are hydrogen, a branched or unbranched C₁-C₈ alkyl group.

10. Resin mixture according to claim 9, in which in formula (I) R¹ and R² independently of each other are hydrogen or methyl.

11. Resin mixture according to claim 10, in which the agent (c) for adjusting reactivity and gel time is 2-(dimethylamino)pyrimidine-5-ol, 2-(dimethylamino)-4,6-dimethylpyrimidine-5-ol or 4,6-dimethyl-2-(octyloxy)pyrimidine-5-ol.

12. Resin mixture according to one of claims 8 to 11, in which the compound of formula (II) is 2,6-di-*tert*-butyl-4-methylphenol or 2,6-di-*tert*-butyl-4-hydroxyanisole.

13. Resin mixture according to claim 12, in which the agent for adjusting gel time and reactivity is a combination (III-1) of 2-(dimethylamino)pyrimidine-5-ol with 2,6-di-*tert-*butyl-4-methylphenol, a combination (III-2) of 2-(dimethylamino)-4,6-dimethylpyrimidine-5-ol with 2,6-di-*tert*-butyl-4-hydroxyanisole or a combination (III-3) of 4,6-dimethyl-2-(octyloxy)pyrimidine-5-ol with 2,6-di-*tert*-butyl-4-methylphenol.

14. Resin mixture according to one of claims 8 to 13, in which the molar ratio of the compound of formula (I) to the compound of formula (II) is 1:1 to 1:10.

15. Reaction resin mortar, comprising the resin mixture according to one of claims 8 to 14 and inorganic additives.

16. Two-component mortar system comprising the reaction resin mortar according to claim 15 as A component and a hardener as B component arranged separated in a way that inhibits reaction.

17. Two-component mortar system according to claim 16, in which the hardener contains an inorganic or organic peroxide as hardening agent.

18. Two-component mortar system according to claim 16 or 17, in which the hardener also contains inorganic aggregates.

19. Two-component mortar system according to one of claims 16 to 18, in which apart from the reaction resin mortar the A component also contains a hydraulic-setting or polycondensable inorganic compound and apart from the hardening agent the B component also contains water.

20. Use of the two-component mortar system according to one of claims 16 to 19 for chemical fixing.

21. Cartridges or foil bags containing a two-component mortar system according to one of claims 16 to 19, which comprise two or more chambers separated from each other, in which the reaction resin mortar or hardener are arranged.

## Revendications

1. Utilisation d'une combinaison d'inhibiteurs, constituée d'un composé de formule générale (I) 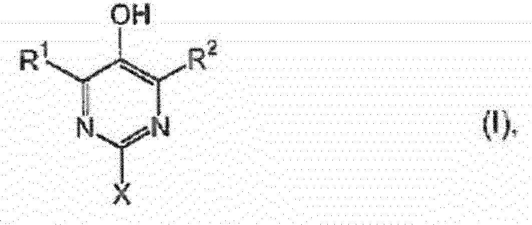 dans laquelle R¹ et R² représentent chacun indépendamment de l'autre un atome d'hydrogène ou un groupe alkyle en C₁-C₂₀ à chaîne droite ou ramifiée, X est -OR³ ou -NR³₂, R³ étant un groupe alkyle en C₁-C₂₀ à chaîne droite ou ramifiée ou un groupe poly(oxyde d'alkylène en C₂-C₄), et d'un composé de formule générale (II) 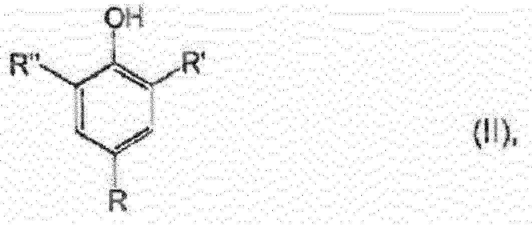 dans laquelle R est un atome d'hydrogène, un groupe alkyle en C₁-C₁₈ à chaîne droite ou ramifiée ou -OR³ ou -NR³₂, R³ étant un groupe alkyle en C₁-C₂₀ à chaîne droite ou ramifiée, R' étant un atome d'hydrogène, un groupe alkyle en C₁-C₁₈ à chaîne droite ou ramifiée et R" étant un groupe alkyle en C₁-C₁₈ à chaîne droite ou ramifiée, pour ajuster la réactivité et le temps de gélification de mélanges de résines à base de composés polymérisables par polymérisation radicalaire.

2. Utilisation selon la revendication 1, pour laquelle, dans la formule (I), R¹ et R² représentent chacun indépendamment de l'autre un atome d'hydrogène ou un groupe alkyle en C₁-C₈ à chaîne droite ou ramifiée.

3. Utilisation selon la revendication 2, pour laquelle, dans la formule (I), R¹ et R² représentent chacun indépendamment de l'autre un atome d'hydrogène ou le groupe méthyle.

4. Utilisation selon la revendication 3, pour laquelle le composé de formule (I) est le 2-(diméthylamino)pyrimidin-5-ol, le 2-(diméthylamino)-4,6-diméthylpyrimidin-5-ol ou le 4,6-diméthyl-2-(octyloxy)pyrimidin-5-ol.

5. Utilisation selon l'une des revendications 1 à 4, pour laquelle le composé de formule (II) est le 2,6-di-*tert-*butyl-4-méthylphénol ou le 2,6-di-*tert*-butyl-4-hydroxyanisole.

6. Utilisation selon la revendication 5, pour laquelle la combinaison est une combinaison (III-1) de 2-(diméthylamino)pyrimidin-5-ol et de 2,6-di-*tert*-butyl-4-méthylphénol, une combinaison (III-2) de 2-(diméthylamino)-4,6-diméthylpyrimidin-5-ol et de 2,6-di-*tert*-butyl-4-hydroxyanisole ou une combinaison (III-3) de 4,6-diméthyl-2-octyloxy)pyrimidin-5-ol et de 2,6-di-*tert-*butyl-4-méthylphénol.

7. Utilisation selon l'une des revendications précédentes, pour laquelle le rapport en moles du composé de formule (I) au composé de formule (II) est de 1:1 à 1:10.

8. Mélange de résines comprenant au moins un composé polymérisable par polymérisation radicalaire, éventuellement un diluant réactif et un agent pour ajuster la réactivité et le temps de gélification, dans lequel l'agent pour ajuster la réactivité et le temps de gélification est une combinaison d'inhibiteurs formée d'un composé de formule générale (I) : 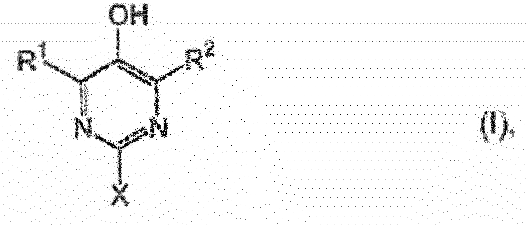 dans laquelle R¹ et R² représentent chacun indépendamment de l'autre un atome d'hydrogène ou un groupe alkyle en C₁-C₂₀ à chaîne droite ou ramifiée, X est -OR³ ou -NR³₂, R³ étant un groupe alkyle en C₁-C₂₀ à chaîne droite ou ramifiée ou un groupe poly(oxyde d'alkylène en C₂-C₄), et d'un composé de formule générale (II) 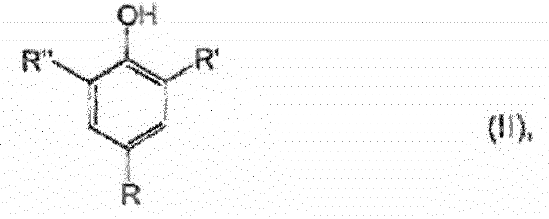 dans laquelle R est un atome d'hydrogène, un groupe alkyle en C₁-C₁₈ à chaîne droite ou ramifiée ou -OR³ ou -NR³₂, R³ étant un groupe alkyle en C₁-C₂₀ à chaîne droite ou ramifiée, R' étant un atome d'hydrogène, un groupe alkyle en C₁-C₁₈ à chaîne droite ou ramifiée et R" étant un groupe alkyle en C₁-C₁₈ à chaîne droite ou ramifiée.

9. Mélange de résines selon la revendication 8, dans lequel, dans la formule (I), R¹ et R² représentent chacun indépendamment de l'autre un atome d'hydrogène, un groupe alkyle en C₁-C₈ à chaîne droite ou ramifiée.

10. Mélange de résines selon la revendication 9, dans lequel, dans la formule (I), R¹ et R² représentent chacun indépendamment de l'autre un atome d'hydrogène ou le groupe méthyle.

11. Mélange de résines selon la revendication 10, dans lequel l'agent (c) pour ajuster la réactivité et le temps de gélification est le 2-(diméthylamino)pyrimidin-5-ol, le 2-(diméthylamino)-4,6-diméthylpyrimidin-5-ol ou le 4,6-diméthyl-2-(octyloxy)pyrimidin-5-ol.

12. Mélange de résines selon l'une des revendications 8 à 11, dans lequel le composé de formule (II) est le 2,6-di-*tert*-butyl-4-méthylphénol ou le 2,6-di-*tert*-butyl-4-hydroxyanisole.

13. Mélange de résines selon la revendication 12, dans lequel l'agent pour ajuster le temps de gélification et la réactivité est une combinaison (III-1) de 2-(diméthylamino)pyrimidin-5-ol et de 2,6-di-*tert*-butyl-4-méthylphénol, une combinaison (III-2) de 2-(diméthylamino)-4,6-diméthylpyrimidin-5-ol et de 2,6-di-*tert*-butyl-4-hydroxyanisole ou une combinaison (III-3) de 4,6-diméthyl-2-octyloxy)pyrimidin-5-ol et de 2,6-di-*tert-*butyl-4-méthylphénol.

14. Mélange de résines selon l'une des revendications 8 à 13, dans lequel le rapport en moles du composé de formule (I) au composé de formule (III) est de 1:1 à 1:10.

15. Mortier à base de résine de réaction, comprenant le mélange de résines selon l'une des revendications 8 à 14 et des granulats inorganiques.

16. Système de mortier à deux composants comprenant en tant que Composant A le mortier à base d'une résine de réaction selon la revendication 15 et en tant que Composant B, disposé séparément et à effet inhibiteur de réaction, un durcisseur.

17. Système de mortier à deux composants selon la revendication 16, dans lequel le durcisseur contient en tant qu'agent de durcissement un peroxyde inorganique ou organique.

18. Système de mortier à deux composants selon la revendication 16 ou 17, dans lequel le durcisseur contient en outre des granulats inorganiques.

19. Système de mortier à deux composants selon l'une des revendications 16 à 18, dans lequel le Composant A contient encore en outre, en plus du mortier à base d'une résine de réaction, un composé inorganique polycondensable ou à prise hydraulique, et le Composant B contient encore en outre, en plus de l'agent de durcissement, de l'eau.

20. Utilisation du système de mortier à deux composants selon l'une des revendications 16 à 19 pour une consolidation chimique.

21. Cartouche, étui ou sachet, contenant un système de mortier à deux composants selon l'une des revendications 16 à 19, qui comprennent deux ou plusieurs compartiments, séparés l'un de l'autre, dans lesquels sont disposés le mortier à base d'une résine de réaction et respectivement le durcisseur.
